Europäisches Patentamt

European Patent Office

Office européen des brevets

(19)

(11) Publication number: **0 144 138**
**B1**

(12) **EUROPEAN PATENT SPECIFICATION**

(45) Date of publication of patent specification: 21.09.88

(51) Int. Cl.⁴: **G 06 F 15/72**

(21) Application number: 84307281.0

(22) Date of filing: 23.10.84

(54) Improvements in and relating to image formation and storage.

| | |
|---|---|
| (30) Priority: 03.11.83 GB 8329348 | (73) Proprietor: **THE GOVERNOR AND COMPANY OF THE BANK OF ENGLAND**<br>**Threadneedle Street**<br>**London EC2R 8AH (GB)** |
| (43) Date of publication of application:<br>**12.06.85 Bulletin 85/24** | |
| | (72) Inventor: **Eccleston, Harry Norman**<br>**110 Priory Road Harold Hill**<br>**Romford Essex (GB)**<br>Inventor: **Scott, Raymond William**<br>**10 Westfield**<br>**Harwell Oxfordshire (GB)** |
| (45) Publication of the grant of the patent:<br>**21.09.88 Bulletin 88/38** | |
| (84) Designated Contracting States:<br>**AT BE CH DE FR IT LI LU NL SE** | |
| (58) References cited:<br>US-A-4 357 624<br><br>DATAMATION, vol. 25, no. 5, May 1979, pages 150-156, Barrington, US; R.G. SHOUP: " "Superpaint" ... the digital animator"<br>HEWLETT-PACKARD JOURNAL, vol. 34, no. 9, September 1983, pages 34-37, Amstelveen, NL; J.R. ALBURGER et al.: "Paintbrush/2700: A general-purpose picture creator" | (74) Representative: **Nash, Keith Wilfrid et al**<br>**KEITH W. NASH & Co. Pearl Assurance House**<br>**90-92 Regent Street**<br>**Cambridge CB2 1DP (GB)** |

Courier Press, Leamington Spa, England.

## Description

### Field of invention

This invention concerns image formation and storage and in particular to formation of a complex image such as the pattern for a bank note and to the storage of information relating to such an image.

### Background to the invention

The creation of the complex patterns making up a design to be applied for example to bank notes or security documents has hitheto involved teams of artists in the preparation of a number of proofs for adjudication by a panel of experts and it is not unknown for the design of a new bank note to take many months from start to finish.

In the prior art, there is known from US Patent No. 4357624 an imaging system intended for video and/or film production and capable of superimposing live graphics on previously created graphics which has been stored on a pixel-by-pixel basis, in particular to superimpose the output of a video camera on the output of a video recorder.

The Hewlett-Packard Journal, Volume 4, No. 9, September 1983, discloses general purpose picture creater known as "Paint Brush/2700". The system employs a half megabyte memory, a program disk and disk drives for storage of pictures, which can be combined or merged to produce the final result. An analagous system known as "Super Paint" is disclosed in Datamation, Volume 25, No. 5, May 1979.

A special problem which arises with compilation of an image for a bank note or the like is the extreme accuracy of reproduction required. To enable this accuracy, the image to be compiled must be based on extremely small pixels and therefore a very large number of such small pixels are present in a complete complex design. This in turn presents a problem in storage of the design information as the design is being created, if the capacity of the memory required to store all the necessary information is not to be unacceptably large.

It is an object of the present invention to provide a method and apparatus whereby complex designs such as are normally required for bank notes and security documents and the like, to be compiled quickly and to a very high level of accuracy and to be capable of reproduction in a temporary manner for amendment and/or approval and/or for final selection, as between one possible design and another.

### Summary of the invention

According to the invention apparatus for compiling an image of a complex design comprises

A) central processor unit (10) responsive to a plurality of input signals and adapted to produce a unique output signal for controlling an electronic display from each different input signal, each output signal being capable of producing in the electronic display an outline having particular shape or pattern,

B) a keyboard (14) and switches operated by the keys thereof for generating input signals for the central processor unit, so that different patterns can be obtained in an electronic display by entering appropriate information via the keyboard,

C) a high definition electronic display device (20) controllable by output signals from the central processor, for producing 2-dimensional displays of the patterns corresponding to the output signals,

D) means (22) for scanning a complex picture such as a pictorial scene or portrait to form part of the finished design and for providing output signals representative thereof,

E) a computer memory (18) for storing information relating to the processor output signals and to the scanner output signals, and

F) means for reading the contents of the memory (18) or a portion thereof, to allow a pattern or portion thereof previously generated from input signals from the keyboard (14) together with a picture or part thereof previously generated from input signals from the scanner (22), being signals stored as information in the memory, to be reconstructed as the required complex image in the electronic display; characterised in that the memory (18) has a capacity sufficient to enable reproducability within 5 microns and, in order to reduce storage capacity required at such a high level of accuracy, the information is stored in the memory as digitised line pattern signals, the processor unit (10) being adapted to convert pixel signals produced by the scanning means (22) into line pattern signals stored in combination with other line pattern signals at least some of which can be recalled as gating signals when a complete design is being assembled.

The high definition display device (20) is preferably a laser plotter such as a Laser Scan type HRDI as produced by Laser Scan Limited, of Cambridge, England.

The central processor (10) is preferably a digital computer such as a Type VAX11/750 or equivalent.

Even with storage of line pattern signals, the memory (18) preferably has a capacity of 200 megabytes or more, to allow a sufficient quantity of digital information to be stored to enable a complex line pattern to be reproduced to a very high level of accuracy. Thus, the positional accuracy of the system is preferably such that the line display in the electronic display can be addressed with an accuracy of $\pm$ 1 micron.

Preferably the beam (and therefore line width) in the display is of the order of 20 microns.

According to a preferred feature of the invention at least one input signal generating device is provided in the form of a digitising unit (24) which is adapted to generate input signals for the central processor unit which after processing by the processor produce output signals which when employed to control an electronic scanning spot display device will produce in the display different basic patterns. This input signal generating device may for example scan a pattern presented to it and produce from the scanning a plurality of electrical digital signals corresponding to the coordinates of the locus of the line making up the pattern. The coordinate information so generated can be stored and recalled to create the same pattern as has been stored.

Preferably the central processor (10) or the digitiser (24) or both together, provide for the scaling of the coordinate information so that the scanned pattern can be reproduced to a larger or smaller (or the same) scale as that which was scanned to produce the coordinate signals.

Preferably means is provided within the processor for combining in the electronic display of the output signals from the latter, information from the digitiser (or a memory associated therewith containing stored digitised information of a line pattern) and information from the memory relating to a stored line pattern which has been previously compiled by entering appropriate commands via the keyboard.

Preferably the digitiser unit (24) is a digitising tablet such as is produced by GTCO Corporation of the USA.

According to a still further feature of this first aspect of the invention at least one further input signal generating device is provided in the form of an image scanner adapted to scan a complex, not necessarily regular pattern making up for example a portrait or pictorial scene or the like and produce therefrom electrical signals which on reproduction in the display will reproduce the original portrait or scene or the like.

Preferably the said third device is a micro-densitometer and digitising means is provided for converting the image scanned signals into digital line pattern signals capable of being stored in the memory.

Preferably the output signals relating to the portrait or scene and stored in the memory in the form of line pattern signals are processed and reprocessed as required via the central processor and re-stored in the memory to permit scaling of the portrait or scene to just the size required in the final image in the display.

Long term storage means such as tape or disc storage may be provided onto which the information relating to portrait or scene is stored after being fully processed using the central processor unit.

Preferably the said further input signal generating device comprises a micro-densitometer such as that supplied by Optronics International Incorporated of the United States of America under the type number System P1000 Photoscan.

Where one part of the assembled picture is to overlay another, the electrical line pattern signals corresponding to the picture content which will have other content overlaid, are employed as a gating signal to gate the line pattern signals corresponding to the overlaying signal content so that where the two signals would in fact coincide the signal corresponding to the overlaying picture content will take precedence over the signal of the underlying picture content. Thus at least some of the signals corresponding to the line patterns which are stored in thhe memory, are employed, on recall, as gating signals to create a so-called electronic window for gating the scenic or portrait or other pictorial line pattern signals also recalled from memory.

All the stored signals may be stored in the same memory, albeit in different separately addressable locations to permit separate recall.

The invention will now be described by way of example with reference to the accompanying drawings which is a block circuit design of a system for performing the invention.

In the system shown control of the functioning of a computer (10) operating as a data processor is achieved via a standard terminal (12) including a keyboard (14) and visual display unit (16).

The computer (10) is programmed inter alia to produce pictorial and graphic outline displays on the screen by a process of pattern generation using appropriate algorithms and/or interactive processing. When a desired pattern or outline has been achieved, information in the form of line pattern signals relating thereto is stored in a main random access memory (18) associated with the computer. Typically a magnetic disc memory having a storage capacity of at least 200 megabytes is employed.

Alternatively the line pattern signals may be stored in different memories and re-called separately for composition and display as a composite picture or displayed using a display having a sufficiently long delay time as to permit the assembly therein of the images of the differently stored signals in combination, or a combination of such techniques may be employed.

A second output device is employed on which large scale, high resolution presentations of the pictorial/outline information in the store (18) can be obtained. This comprises a laser plotter (20). This preferably has a writing accuracy of ± 1 micron and a reproducability accuracy of ± 5 microns and in order to achieve high resolution, a line width of 20 microns. However it is to be understood that these parameters are indicative of the levels of positional accuracy and reproducability required and the computer (using commands from the keyboard (14) or from information stored in the memory (18)) controls the size of the writing beam in the laser plotter (20) the permit thicker lines to be drawn as required.

The plotter (20) can therefore be set to display pictorial information derived from information stored in the memory (18).

An image scanner (22) serves as a further graphics input device. This unit allows pictorial information such as pictures of portraits, landscapes and the like to be scanned and digitised to produce information signals suitable for storage in the memory (18) after processing by the computer (10). Thus for example known processing, techniques may be employed to compress the information to reduce the amount of storage space required in the memory (18). Typically the scanner (22) breaks down a half tone or coloured picture into digital information with associated colour line and density information for storage therewith. A reconstruction of the original picture by the laser plotter (20) can therefore be achieved in black and white (or full colour if a suitable plotter is employed). The information in the form of line pattern signals stored in the memory (18) is arranged to be sufficient to enable a printing plate or series of plates (where different colours are to be employed) to be constructed therefrom.

A digitiser tablet (24) allows patterns and outlines to be reduced to binary signals for storing as line pattern signals in the computer memory (18) along with other digitised picture information. The tablet (24) converts a dot matrix picture or line pattern into a binary signal equating to a plurality of co-ordinates through the picture or pattern.

Each of the output signals from the tablet (24) and scanner (22) can be supplied via the processor (10) for storage in the memory (18) as a complete picture or part of a picture or overlay or background.

Patterns generated from programmes stored in the memory (18) or in an internal memory associated with the terminal (12) or date processor computer (10) can also be set up on the plotter (20) and can be used as infill or background material when compiling an overall display on the plotter (12).

The quantity of storage required for full pixel storage from a scanned picture such as a portrait is reduced by converting the pixel signals into line pattern signals. When full pixel to line conversion is required, as when a complete picture is to be assembled for checking and inspection, outline "line" information is recalled to act as an electrical gating signal to allow full picture information to be reproduced.

The full pictorial picture information may be stored on a tape or the like so that it can be inserted into the memory when required to assemble a complete picture.

The laser plotter (20) stores the plot/scan temporarily on photochromic sheet material which can be switched to clear a trace and permit a rewrite. When the final picture has been assembled the photochromic sheet can be replaced with a photographic plate from which a microfiche photograph transparency can be formed. The final stage involves the production of a Diazonegative.

If one picture is to be overlaid on another then the boundary of the one picture has to be defined and this is achieved by placing the document containing the one picture on the digitiser tablet and plotting the outline of the portion of the document picture to be overlaid and using this to gate a window in the other picture signal.

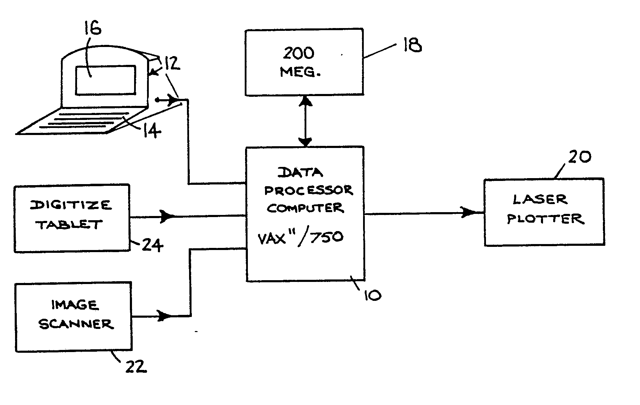

**Claims**

1. Apparatus for compiling a complex image of the design of a bank note or like security document comprising:

A) a central processor unit (10) responsive to a plurality of input signals and adapted to produce a unique output signal for controlling an electronic display from each different input signal, each output signal being capable of producing in the electronic display an outline, having a particular shape or pattern,

B) a keyboard (14) and switches operated by the keys thereof for generating input signals for the central processor unit, so that different patterns can be obtained in an electronic display by entering appropriate information via the keyboard,

C) a high definition electronic display device (20) controllable by output signals from the central processor, for producing 2-dimensional displays of the patterns corresponding to the output signals,

D) means (22) for scanning a complex picture such as a pictorial scene or portrait to form part of the finished design and for providing output signals representative thereof,

E) a computer memory (18) for storing information relating to the processor output signals and to the scanner output signals, and

F) means for reading the contents of the memory (18) or a portion thereof, to allow a pattern or portion thereof previously generated from input signals from the keyboard (14) together with a picture or part thereof previously generated from input signals from the scanner (22) being signals stored as information in the memory, to be reconstructed as the required complex image in the electronic display; characterised in that the memory (18) has a capacity sufficient to enable reproducability within 5 microns and, in order to reduce storage capacity required at such a high level of accuracy, the information is stored in the memory as digitised line pattern signals, the processor unit (10) being adapted to convert pixel signals produced by the scanning means (22) into line pattern signals stored in combination with other line pattern signals at least some of which can be recalled as gating signals when a complete design is being assembled.

2. Apparatus as claimed in Claim 1, characterised by at least one input signal generating device in the form of a digitising unit (24) which is adapted to generate input signals for the central processor unit.

3. Apparatus as claimed in either of the preceding claims, characterised in that the central processor (10) or the digitiser (24) or both together, provide for the scaling of coordinate information so that a scanned pattern can be reproduced to a larger or smaller scale as that which was scanned, to produce line pattern signals.

4. Apparatus as claimed in any of the preceding claims characterised by at least one input signal generating device in the form of an image scanner adapted to scan a portrait or pictorial scene or the like and produce therefrom electrical signals which are processed and converted to line pattern signals.

5. Apparatus as claimed in claim 4, characterised in that the said portrait scanning device is a micro-densitometer and digitising means is provided for converting the image scanned signals into line pattern signals capable of being stored in the memory.

6. Apparatus as claimed in any preceding claim, characterised in that when one part of an assembled picture is to overlay another, the line pattern signals corresponding to the picture content which is to have other content overlaid, are employed as gating signals to gate the signals corresponding to the overlaying signal content so that, where the signals coincide, the signal corresponding to the overlaying picture content will take precedence over the signal of the underlaying picture content.

**Patentansprüche**

1. Gerät zum Zusammenstellen eines komplexen Bildes, wie eines Entwurfes für eine Banknote oder ein gleichartiges Sigcherheitsdokument, bestehend aus

A) einer zentralen Prozessoreinheit (10), die auf eine Vielzahl von Eingangssignalen anspricht und zum Steuern eines elektronischen Displays aus jedem einzelnen Eingangssignal ein eindeutiges Ausgangssignal erzeugt, wobei jedes Ausgangssignal in dem elektronischen Display einen Umriß mit einer besonderen Form oder einem besonderen Verlauf erzeugen kann,

B) einem Tastenfeld (14) und von den Tasten betätigten Schaltern zum Erzeugen von Eingangssignalen für die zentrale Prozessoreinheit, so daß verschiedene Muster in einem elektronischen Display durch Eingabe geeigneter Informationen über das Tastenfeld erzielt werden können,

C) einer durch Ausgangssignale vom zentralen Prozessor steuerbaren elektronischen Displayvorrichtung (20) mit einer hohen Auflösung zum Erzeugen von den Ausgangssignalen entsprechenden zweidimensionalen Darstellungen der Muster,

D) Einrichtungen (22) zum Abtasten eines komplexen Bildes, wie zum Beispiel einer Bildszene oder eines Portraits, zum Ausbilden eines Teils des endgültigen Entwurfes und zum Ausbilden von für diesen repräsentativen Ausgangssignalen,

E) einem Computerspeicher (18) zum Speichern von Information bezüglich der Prozessor- und der Scanner-Ausgangssignale und

F) Einrichtungen zum teilweisen oder vollständigen Auslesen des Inhalts des Speichers (18), damit ein zuvor aus den Ausgangssignalen vom Tastenfeld (14) erzeugtes Muster oder ein Teil desselben, zusammen mit einem Bild oder einem Teil, das zuvor von den Eingangssignalen vom Scanner (22) erzeugt wurde, als Information in dem Speicher gespeichert wird zum Wiederaufbau des erforderlichen komplexen Bildes in dem elektronischen Display, dadurch gekennzeichnet, daß der Speicher (18) eine zum Erzielen einer Reproduzierbarkeit innerhalb von fünf Mikron ausreichende Kapazität aufweist und zum Vermindern der für ein Speichern mit dieser hohen Genauigkeit erforderlichen Speicherkapazität die Information in dem Speicher als digitalisierte Zeilenmustersignale gespeichert wird, die Prozessoreinheit (10) von den Abtasteinrichtungen (22) erzeugte Bildpunktsignale in Zeilenmustersignale umwandeln kann, die in Kombination mit anderen Zeilenmustersignalen gespeichert werden, von denen mindestens einige bei Zusammenstellen eines vollständigen Entwurfes als Steuersignale wieder abgerufen werden können.

2. Gerät nach Anspruch 1, gekennzeichnet durch mindestens eine ein Eingangssignal erzeugende Vorrichtung in der Form eines Digitalisierungs-Einheit (24), die Eingangssignale für die zentrale Prozessoreinheit erzeugen kann.

3. Gerät nach einem der vorhergehenden Ansprüche, dadurch gekennzeichnet, daß der zentrale Prozessor (10) oder der Digitalisierer (24) oder beide zusammen den Maßstab für die Koordinateninformation bilden, so daß ein abgetastetes Muster zum Erzeugen von Zeilenmustersignalen in einem größeren oder kleineren Maßstab als das abgetastete wiedergegeben werden kann.

4. Gerät nach irgendeinem der vorhergehenden Ansprüche, gekennzeichnet durch mindestens eine ein Eingangssignal erzeugende Vorrichtung in der Form eines Bildabtasters, der ein Portrait oder eine Bildszene oder dergleichen abtasten und von diesen elektrische Signale erzeugen kann, die verarbeitet und in Zeilenmustersignale umgewandelt werden.

5. Gerät nach Anspruch 4, dadurch gekennzeichnet, daß die Portrait-Abtastvorrichtung ein Mikro-Schwingungsmesser ist und eine Digitalisierungs-Einrichtung zum Umwandeln der von dem Bild abgetasteten Signale in in dem Speicher speicherbare Zeilenmustersignale vorgesehen ist.

6. Gerät nach irgendeinem der vorhergehenden Ansprüche dadurch gekennzeichnet, daß, wenn sich ein Teil eines zusammengesetzten Bildes einem anderen überlagern soll, die dem Bildinhalt, dem ein anderer Inhalt überlagert werden soll, entsprechenden Zeilenmustersignale als Steuersignale zum Steuern der dem überlagernden Signalinhalt entsprechenden Signale verwendet werden, so daß bei einem Zusammenfallen der Signale das Signal, das dem überlagernden Bildinhalt entspricht, Vorrang vor dem Signal des darunterliegenden Bildinhaltes hat.

**Revendications**

1. Appareil pour compiler une image complexe du dessin d'un billet de banque ou d'un document de sécurité analogue, comprenant:

A) une unité formant processeur central (10) sensible à une pluralité de signaux d'entrée et adaptée pour produire un signal de sortie unique pour commander un dispositif d'affichage électronique à partir de chaque signal d'entrée différent, chaque signal de sortie étant à même de produire, dans le dispositif d'affichage électronique, un contour possédant une forme ou une configuration particulière,

B) un clavier (14) et des interrupteurs actionnés par les touches du clavier pour produire des signaux d'entrée pour l'unité centrale de traitement, de sorte que différentes configurations peuvent être obtenues dans un dispositif d'affichage électronique moyennant l'introduction d'une information appropriée par l'intermédiaire du clavier,

C) un dispositif d'affichage électronique de haute définition (20) pouvant être commandé par des signaux de sortie délivrés par le processeur central pour produire des affichages bidirectionnels des configurations correspondant aux signaux de sortie,

D) des moyens (22) pour explorer par balayage une image complexe, comme par exemple une scène descriptive ou un portrait devant faire partie du dessin terminé et pour délivrer des signaux de sortie représentatifs de ce dessin,

E) une mémoire d'ordinateur (18) servant à mémoriser l'information relative au signaux de sortie du processeur et aux signaux de sortie du dispositif d'exploration par balayage, et

F) des moyens pour lire le contenu de la mémoire (18) ou d'une partie de cette mémoire de manière à permettre la reconstitution d'une configuration ou d'une partie de cette dernière, produite antérieurement à partir de signaux d'entrée délivrés à partir du clavier (14), ainsi qu'une image ou une partie de cette dernière, produite antérieurement à partir de signaux d'entrée délivrés par le dispositif d'exploration par balayage (22) et mémorisés en tant qu'information dans la mémoire, sous la forme d'une image complexe requise dans le dispositif d'affichage électronique; caractérisé en ce que la mémoire (18) possède une capacité suffisante pour permettre une reproductibilité à moins de 5 microns et. afin de réduire la capacité de mémoire requise à un tel niveau élevé de précision, l'information est mémorisée dans la mémoire sous la forme de signaux mémorisés de configurations linéaires, l'unité formant processeur (10) étant apte à convertir des signaux de points d'image produits par les moyens d'exploration par balayage (22) en des signaux de configurations linéaires, mémorisés en combinaison avec d'autres signaux de configurations linéaires, dont au moins certains peuvent être rappelés en tant que signaux de commande lorsqu'un dessin complet est formé par assemblage.

2. Dispositif selon la revendication 1, caractérisé par au moins un dispositif produisant des signaux d'entrée réalisé sous la forme d'une unité de mémorisation (24), qui est adaptée pour produire des signaux d'entrée pour l'unité formant processeur central.

3. Dispositif selon l'une quelconque des revendications précédentes, caractérisé en ce que le processeur central (10) ou l'unité de numérisation (24) ou ces deux unités, réalisent le changement d'échelle de l'information de coordonnées de sorte qu'une configuration explorée par balayage peut être reproduite à une échelle plus grande ou plus petite que celle considérée lors de son exploration par balayage, de manière à produire des signaux de configurations linéaires.

4. Dispositif selon l'une quelconque des revendications précédentes, caractérisé par au moins un dispositif produisant des signaux de sortie, sous la forme d'un dispositif d'exploration d'images par balayage, adapté pour réaliser l'exploration par balayage d'un portrait ou d'une scène ou analogue et produire, à partir de là, des signaux électriques qui sont traités et convertis en signaux de configurations linéaires.

5. Dispositif selon la revendication 4, caractérisé en ce que ledit dispositif d'exploration par balayage de portraits est un microdensitomètre et que des moyens de numérisation sont prévus pour convertir les signaux d'image explorés par balayage en des signaux de configurations linéaires pouvant être mémorisées dans la mémoire.

6. Dispositif selon l'une quelconque des revendications précédentes, caractérisé en ce que, lorsqu'une partie d'une image assemblée est susceptible d'être en chevauchement avec une autre partie de cette image, les signaux de configurations linéaires correspondant au contenu de l'image sur laquelle doit se superposer un autre contenu, sont utilisés en tant que signaux de commande pour commander les signaux correspondant au contenu en signaux de superposition de manière que, lorsque les signaux coïncident, le signal correspondant au contenu de l'image, en superposition, a priorité par rapport au signal du contenu de l'image sous-jacent.